# EUROPEAN PATENT SPECIFICATION

(11) **EP 1 171 320 B1**
(45) Date of publication and mention of the grant of the patent: **18.06.2003**
(21) Application number: 99916632.5
(22) Date of filing: 12.04.1999
(51) Int. Cl.: B60C 17/00, B60C 9/18

(54) **TREAD STIFFENING SUPPORT RIBS FOR RUNFLAT TIRE**
LAUFFLÄCHE VERSTÄRKENDE TRAGRIPPE FÜR NOTLAUFREIFEN
NERVURES SUPPORTS DE RENFORCEMENT DE LA BANDE DE ROULEMENT POUR PNEUMATIQUE DEGONFLE

(43) Date of publication of application: 16.01.2002
(73) Proprietor: THE GOODYEAR TIRE & RUBBER COMPANY, Akron, Ohio 44316-0001 (US)
(72) Inventor: ABBOTT, John, Ronald, Cuyahoga Falls, OH 44223 (US)
(74) Representative: Leitz, Paul
(86) International application number: US9907963
(87) International publication number: WO00061390

(56) References cited:
- EP-A- 0 605 177
- EP-A- 0 836 956
- EP-A- 0 853 009
- WO-A-98/54014
- FR-A- 2 425 334
- US-A- 4 111 249
- PATENT ABSTRACTS OF JAPAN vol. 012, no. 392 (M-755), 19 October 1988 (1988-10-19) -& JP 63 141809 A (YOKOHAMA RUBBER CO LTD:THE), 14 June 1988 (1988-06-14)

## Description

### TECHNICAL FIELD

The present invention relates to pneumatic radial-ply runflat tires and in particular to runflat tire construction that reduces lateral and circumferential tread lift during runflat operation.

### BACKGROUND OF THE INVENTION

Designers of pneumatic tires have devised various methods by which to make a tire that is capable of providing acceptable performance following sudden, unexpected deflation, such as a tire puncture. Under such conditions, the goal of the tire designer is to design a tire able to provide adequate vehicle handling and safe continued operation over a distance from the place where the tire has lost its pressure to a place desired by the driver, such as a service station. where the tire can be repaired or replaced.

A pneumatic tire designed for sustained operation under conditions of unpressurization or underpressurization is generally called an extended mobility tire (EMT) or simply a runflat tire. The latter term refers to the tire's ability to be driven while uninflated or in what would generally be called a "flat" condition. A conventional pneumatic tire will collapse upon itself, becoming flat, when it is uninflated and carrying the weight of a vehicle. Such a tire's sidewalls buckle axially outward in the portion of the tire adjacent to the ground-contacting portion of the tread, making the tire "flat."

A tire's sidewalls are the portion of a tire usually having the lowest resistance to deformation under vertical loading. Therefore the most widely used design methods used to achieve acceptable extended mobility or runflat capability involve various methods by which to reinforce the sidewalls, giving them sufficient strength and rigidity to support the wheel load when the tire is uninflated. Such reinforced sidewalls do not collapse or buckle onto themselves.

State-of-the-art reinforced sidewalls contain one or more circumferentially disposed wedge inserts within each sidewall region, such as between the carcass plies. Thus each sidewall is thickened in such a way that its overall thickness in the region between the bead and the tread shoulder is more or less uniform. The one or more circumferentially disposed wedge inserts in each sidewall are generally crescent-shaped in cross-sectional view, in order to conform to the internal shape of the sidewalls. Such wedge reinforced sidewalls, when operated in the uninflated condition, experience a net compressive load in the region of the sidewall. And, more specifically, the bending stresses on the sidewalls are such that the axially outwardmost portions of the reinforced sidewalls experience tensile forces while the axially inward portions experience compression stresses during runflat operation.

The bending forces that act upon the reinforced sidewalls of an uninflated EMT or runflat tire lead to the transmission of bending forces from the sidewall regions to the ground-contacting portions of the tread.

The result is that the uninflated EMT tends to have a compressed tread footprint. More specifically, the transmission of bending forces from the sidewalls to the tread region tend to cause the central portions of the tread to buckle upwards. The term or art used to refer to the upwards buckling of the tread is tread lift.

The tread lift arises from compressive loading in both the lateral and circumferential directions. The central portion of the tread accordingly tends to lose contact with the ground during runflat operation, having consequent adverse effects upon vehicle handling, especially during high speed operation.

Tread lift also takes place in the circumferential direction. The forces acting upon the ground-contacting portion of the tread are such that the bending forces that act upon the tread in the frontmost and rearmost portions of the footprint area act in such a way that, as viewed from the side of the tire, i.e., in the axial direction, the central region of the ground-contacting portion of the tread tends to rise off the ground. Thus tread lift has both lateral and circumferential components.

One method used to stiffen the tread against lateral tread lift employs the use of a metal-reinforced first radial carcass ply which resists the tensile forces that arise during lateral tread lift. Another method by which to inhibit tread lift involves the use of decoupling grooves in the lateral-most regions of the tread. The decoupling grooves inhibit the transmission of bending forces from the sidewalls to the central portions of the tread. The bottoms or radially inwardmost portions of the decoupling grooves act as hinges, allowing the sidewalls to deform without affecting the adjacent tread region. An example of a runflat tire design incorporating decoupling "shoulder grooves" is described in Goodyear's Patent Application PCT/US98/00717, filed 15 January 1998 and having a common assignee with the present application.

Another method by which to inhibit runflat tread lift is described in Goodyear's Patent Application PCT/US98/14452, filed 10 July 1998 and having a common assignee with the present application, wherein a lateral-tensile-stress-bearing fabric underlay is deployed radially inward of the breaker package. The laterally aligned (or axially aligned) fibers of such a fabric underlay might or might not be prestressed in tension to inhibit upward buckling of the central portion of the tread of an uninflated EMT or runflat tire. Yet another method by which to minimize runflat tread lift is described in Goodyear's Patent Application PCT/US98/06004, filed 26 March 1998 and having a common assignee with the present application, wherein a "tread wedge" is used to thicken the structures underlying the tread and thus inhibit tread lift during runflat operation.

With regard to the circumferential component of tread lift during runflat operation, one method of managing it is described in the aforementioned Goodyear's Patent Application PCT/US98/06004 wherein a fabric underlay comprising more or less circumferentially aligned cords inhibits tread lift in the circumferential direction.

As always in the design of an EMT or runflat tire, the goals of the tire design include the minimizing of tire mass and provision of good riding comfort under normal inflated operation while also providing adequate safe vehicle handling during uninflated operation. Long runflat service life is also a design goal.

### OBJECTS OF THE INVENTION

It is an object of the present invention to provide a radial tire as defined in one or more of the appended claims and, as such, having the capability of being constructed to accomplish one or more of the following subsidiary objects.

One object of the present invention is to provide a runflat radial tire that is resistant to both lateral and circumferential tread lift during runflat operation.

Another object of the present invention is to provide a runflat radial tire that is relatively light in weight.

Another object of the present invention is to provide a runflat tire that is able to provide good vehicle runflat handling and an extended runflat service life.

Still another object of the present invention is to provide a runflat tire having a reduced heat generating potential within the tread reinforcing structures during both normal inflated, high-speed operation and especially during runflat operation.

Yet another object of the present invention is to provide a plurality of tread stiffening support that provide puncture protection from cuts and objects picked up on the road.

### SUMMARY OF THE INVENTION

The present invention relates to a pneumatic radial ply tire having a tread, a carcass comprising a radial ply structure, an inner liner and two sidewalls each reinforced by one or more wedge inserts, a belt structure located between the tread and the radial ply structure and a plurality of parallel-aligned ribs lying laterally across and radially inward of the tread and radially inward or outward of the belt structure. The length of each rib of the plurality of ribs is approximately equal to the width of the belt structure. In one embodiment, each rib is made of a monolithic, fiber-reinforced plastic material from the class of plastic matrix materials that includes thermoplastics, such as polyetherimide, polyetheretherketone and polyphenylene sulfide and thermosets, such as polyester and epoxy. The fiber-reinforcing materials are of the class of high-modulus materials that includes carbon fiber, fiberglass and aramid filaments. Preferably, the formulation of the fiber-reinforced plastic material is between about 30 percent to 70 percent by weight of reinforcement material and the remainder primarily being the plastic matrix. The reinforcing fibers within each monolithic rib are preferably unidirectional, being aligned with the axis, extending along the length of the rib. The preferred relationship between the thickness and width of each rib is such that the thickness is between 10 percent and 45 percent of the width of the rib. The minimum preferred circumferential spacing between each rib in the plurality of ribs is between 50 percent and 200 percent of the width of the ribs on either side of the spacing. An alternative location of the plurality of ribs is beneath or radially inward of the tread and belt structure and within the ply structure.

An alternative embodiment incorporates a rib made of three layers of which the first and third layers, i.e., the two outermost layers, are made of a reinforced plastic material as previously described with regard to the first embodiment. The middle layer of the three rib layered rib is made from an elastomeric material, such as urethane or rubber, to allow the ribs to endure shear stresses associated with the tread deflections during normal or runflat operation of the tire.

Other benefits and advantages of the invention will become apparent to those skilled in the art to which it pertains upon a reading and understanding of the following detailed specification.

### BRIEF DESCRIPTION OF THE DRAWINGS

The structure, operation, and advantages of the invention will become further apparent upon consideration of the following description taken in conjunction with the accompanying drawings, wherein:
**FIGURE 1** is an oblique cut-away view of a radial ply tire showing the location of the present invention in relation to the tread and its underlying structures;
**FIGURE 2** is a schematic sectional view of a layered version of the tread reinforcing ribs of the present invention;
**FIGURE 3** is a fragmentary cross-sectional view of a prior art upward-buckled tire tread;
**FIGURE 4A** is a fragmentary cross-sectional view of the central portion of the tread section shown in **FIGURE 3;**
**FIGURE 4B** is a fragmentary cross-sectional view of the central portion of the tread section of the present invention, with the tread-reinforcing rib in place;
**FIGURE 5** shows and I-beam analog of a tread structure; and
**FIGURE 6** is cross-sectional view of an alternative embodiment of the invention.

### DEFINITIONS

"Apex" means an elastomeric filler located radially above the bead core and between the plies and the turnup plies.

"Aspect ratio" means the ratio of the section height of a tire to its section width; also refers to the cross-sectional profile of the tire; a low-profile tire, for example, has a low aspect ratio.

"Axial" and "axially" means the lines or directions that are parallel to the axis of rotation of the tire.

"Bead" or "bead core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Belt structure" or "reinforcement belts" or "belt package" means at least two annular layers or plies of parallel cords, woven or unwoven, underlying the tread, unanchored to the bead, and having both left and right cord angles in the range from 18° to 30° relative to the equatorial plane of the tire.

"Carcass" means the tire structure apart from the belt structure, tread, undertread over the plies, but including the beads.

"Casing" means the carcass, belt structure, beads, sidewalls and all other components of the tire excepting the tread and undertread.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Crown" or "tire crown" means the tread, tread shoulders and the immediately adjacent portions of the sidewalls.

"Equatorial plane" means the plane perpendicular to the tire's axis of rotation and passing through the center of its tread; or the plane containing the circumferential centerline of the tread.

"EMT" means "extended mobility tire," which means the same as "runflat tire."

"Footprint" means the contact patch or area of contact of the tire tread with a flat surface at zero speed and under normal load and pressure.

"Gauge" refers to thickness measurement.

"Inner liner" means the layer or layers of elastomer or other material that form the inside surface of a tubeless tire and that contain the inflating fluid within the tire.

"insert" means the same as "wedge insert," which is the crescent- or wedge-shaped reinforcement typically used to reinforce the sidewalls of runflat-type tires; it also refers to the elastomeric non-crescent-shaped insert that underlies the tread.

"Lateral" means a direction parallel to the axial direction.

"Moment of inertia" or "structural moment of inertia" refers to the structural rigidity of a beam section or other structure such as, specifically, the sidewall of a tire. A structure, such as a tire sidewall, having a high moment of inertia is more rigid than a similar structure having a lower moment of inertia.

"Normal inflation pressure" means the specific design inflation pressure at a specified load assigned by the appropriate standards organization for the service condition for the tire.

"Normal load" means the specific design inflation pressure and load assigned by the appropriate standards organization for the service condition for the tire.

"Ply" means a cord-reinforced layer of rubber-coated parallel cords.

"Radial" and "radially" mean directions radially toward or away from the axis of rotation of the tire.

"Radial ply structure" means the one or more carcass plies or which at least one ply has reinforcing cords oriented at an angle of between 65° and 90° with respect to the equatorial plane of the tire.

"Radial ply tire" means a belted or circumferentially-restricted pneumatic tire in which at least one ply has cords which extend from bead to bead and are laid at cord angles between 65° and 90° with respect to the equatorial plane of the tire.

"Runflat" or "runflat tire" is a pneumatic tire that is designed to provide limited service while uninflated or underinflated.

"Section height" means the radial distance from the nominal rim diameter to the outer diameter of the tire at its equatorial plane.

"Section width" means the maximum linear distance parallel to the axis of the tire and between the exterior of its sidewalls when and after the tire has been inflated at normal pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tangential" and "tangentially" refer to segments of circular curves that intersect at a point through which can be drawn a single line that is mutually tangential to both circular segments.

"Tread cap" refers to the tread and the underlying material into which the tread pattern is molded.

"Tread width" means the arc length of the tread surface in the plane which includes the axis of rotation of the tire.

### DETAILED DESCRIPTION OF THE PREFERRED EMBODIMENT

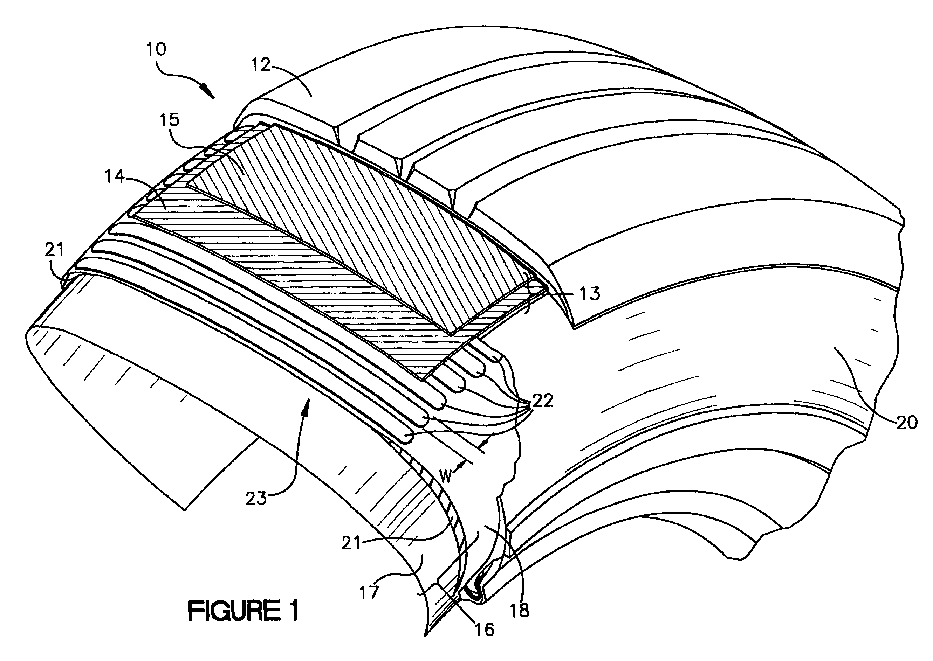

With reference to **FIGURE 1**, a pneumatic tire **10** according to the invention is illustrated. The tire **10** maybe a runflat tire which incorporates conventional tire components such as a tread **12,** a belt structure **13** comprising reinforcing belts **14** and **15,** a carcass ply structure **16** comprising one or more carcass plies **17,18,** and two sidewalls **20.** Other conventional tire components such as an apex and/or a chipper can also be included as well as such runflat tire components as one or more wedge insert reinforcements **21** in each sidewall. One novel feature of the tire **10** is the provision of support members **23,** including a plurality of parallel-aligned ribs **22** aligned laterally across the tread width in a location that is radially inward of the belt structure **13** and typically radially inward of the tread **12** and the belt structure **13.** Typically, the ribs are disposed in an elastomeric sheet (not shown) for handling and placement in the tire. The ribs **22** are semi-rigid structures built according to the methods described below. The role of the ribs **22** in the runflat tire is that of inhibiting lateral and circumferential tread lift during operation of the tire in the runflat mode.

The ribs **22** in **FIGURE 1** are shown to be disposed radially outward of the ply structure **16.** However, as will become evident in the description that follows, the location of the ribs **22** is such that their greatest mechanical advantage in inhibiting treadlift will occur when the ribs are disposed as far as possible from the neutral bending axis, on its tensile-stress side, of the tread **12** and all its underlying structures. In other words, if the ribs **22** were to be disposed within the ply structure **16,** say between any two of the one or more plies **17,18** of the ply structure, they would have greater mechanical advantage than were they to be disposed radially outward of the ply structure. On the other hand, the disposition of the ribs **22** in the location shown in **FIGURE 1** is a very practical location from the point of view of manufacturing simplicity. Clearly, if the ply structure **16** comprises only a single carcass ply, the ribs **22** would be deployed radially outward of that single ply and beneath the belt structure **13.** From a manufacturing-practicality point of view, the preferred location of the ribs **22** is radially inward of the belt structure **13** and radially outward of the ply structure **16.** It is also within the terms of the present invention to place the ribs **22** in the crown region radially outward of the belt structure **13** and below the tread **12.**

One important advantage of the invention is the possibility of eliminating tire components due to the presence of the ribs **22.** Examples of tire components that might be eliminated include third belts and/or massive tread-stiffening wedge inserts beneath the tread. Secondarily, a well-stiffened tread tends to cause the sidewalls to standup more vertically during runflat operation, allowing for the possibility of using less sidewall reinforcing material. Thus, although the ribs **22** can coexist with conventional tire components, it is possible to improve the runflat handling of a vehicle equipped with tires incorporating the present invention and also to improve upon the runflat service life of a runflat tire having less total mass than currently produced runflat tires. That is, the ribs **22** have the potential to provide a runflat tire that is lighter in weight than a corresponding runflat tire incorporating such other tread-strengthening structures as "tread wedges" disclosed in PCT/US98/06004 to minimize tread lift during runflat operation.

The light weight and low mass of the ribs **22** has the additional benefit, compared to other more massive ways to make the tread rigid, of providing a rigid tread structure having minimum potential for flexure-induced heat buildup during runflat operation.

### Rib Structure, Materials, and Dimensions

The preferred structure of each rib **22** is a monolithic, fiber-reinforced (or fiber-filled) plastic material. The plastic matrix of the fiber-reinforced material could be a thermoplastic from the class of materials that includes polyetherimide, polyetheretherketone and polyphenylene sulfide or a thermoset material such as epoxy or polyester. The fiber-reinforcing materials are of a class of materials including carbon fiber, fiberglass and aramid filaments. The fiber reinforcing materials are filaments that are preferably unidirectional, being parallel aligned with the axis along the length of rib **22.** The preferred formulation for the monolithic rib **22** would be between 30 percent and 70 percent by weight of the fiber reinforcing materials and the remainder primarily being the plastic matrix although the proportions of the respective matrix and reinforcing materials would of course be dictated by the specifically intended tire use application.

It is also within the terms of the invention to form the rib 22 out of cross ply laminate to provide strength and crack resistance in the transverse direction.

It is also within the terms of the invention to form the rib **22** of a semi-rigid, homogenous material plastic such as nylon, which have good adhesion to rubber and inhibit the lateral and circumferential tread lift during runflat operation of the tire.

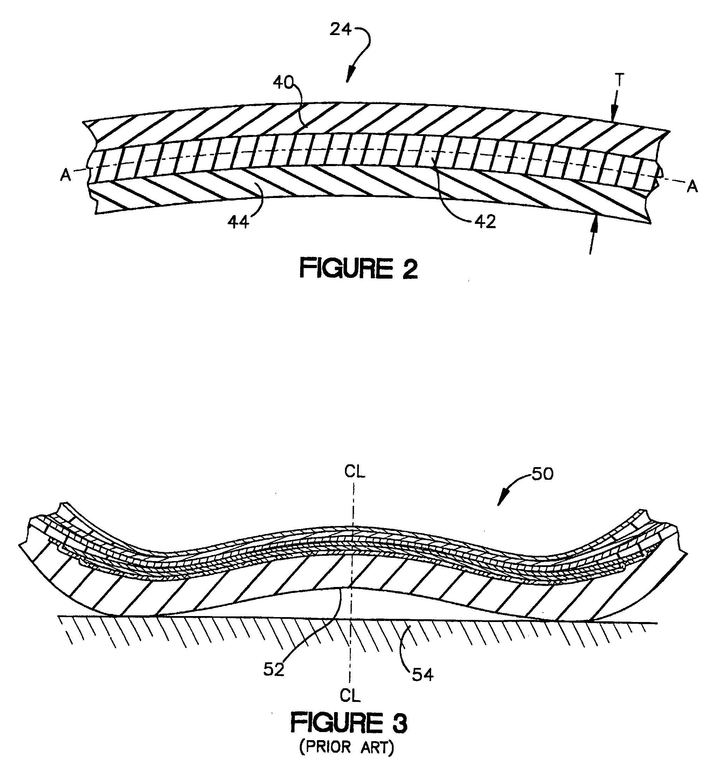

**FIGURE 2** shows an alternative design for support members **23** in which ribs **22** are replaced with ribs **24** that have a layered structure. In this alternative embodiment, each rib **24** has first, second and third layers **40,42,44,** respectively. The first layer **40** and the third layer **44** are made of a fiber reinforced plastic matrix having the same composition and a formulation of the sorts listed above for the monolithic rib **22.** That is, the first layer **40** and the third rib layer **44** are to be made of a composite material between 30 percent and 70 percent by weight of the fiber reinforcing materials and the remainder primarily being the plastic matrix although the specific composite design will be dictated by the specific application. The inventor acknowledges the possibility that the materials used to make the first layer **40** might be different from those used to make the third layer **44,** accordingly as an optimized design of the rib structure **24** might require.

As for the intervening second layer **42** of the three-layered rib **24** shown in **FIGURE 2,** the material would be an elastomer having a modulus of elasticity of between 300 psi (2.1 MPa) and 3,000 psi (21 MPa). The use of an elastomeric material for the second layer **42** would absorb the shear stresses which reach their highest magnitude at the neutral axis **A-A.** By configuring the layered rib **24** so that it has the three layers **40,42,44** made of the materials described above, the preferred outer first and third layers **40,44** provide the requisite stiffness to stiffen the tread **12** against tread lift during runflat operation while the elastomeric second layer **42** enables the ribs to reliably endure the shear stresses associated with the inevitable tread deflections associated with both normal-inflated operation of the tire **10** and especially with runflat operation of the tire.

The plastic matrix materials employed in the first layer **40** and the third layer **44** of each layered rib **24** are such that the modulus of elasticity of the plastic matrix material of the first layer **40** and the third layer **44** is between 150,000 psi (1050 MPa) and 650,000 psi (4550 MPa). The fiber filaments of reinforcing materials within the rib **24** are preferably unidirectional, being aligned with the axis extending along the length of the rib **24.** However, it is within the terms of the present invention that the filaments be disposed within a range of about 0° to 45° with respect to the axis or length of the rib **24.** With regard to the preferred monolithic or non-layered rib **22,** the same materials considerations also apply.

In the remaining portion of this description of this tread-reinforcing rib invention, the designation number **22,** from **FIGURE 1,** will be used in reference to all such reinforcing ribs, whether of the layered-structure formed rib **22 (FIGURE 2)** or the monolithic-structure formed rib **24.** However for purposes of understanding the structural relationships of the ribs, both are substantially the same.

There will be a preferred rib thickness to prevent tire lift based on tire size, tread width and load capacity. The width of each rib 22 can vary, but will range between 0.150" and 1.50". If the width is too large it will interfere with the smooth entry into contact with the road and a smooth exit from contact with the road.

While the overall length of each rib **22** will depend on the specific tire in each application, the length of each rib **22** within a given tire is between 50 percent and 110 percent of the maximum width of the belt structure **13.** If the length of each rib **22** were more than 110 percent greater than the maximum width of the belt structure, then it would be forced to follow a small radius of curvature at both edges. This would create an undersiable high level of stiffness in the tread shoulder regions. If the ribs **22** were less than about 50 percent of the maximum width of the belt structure **13,** the ribs would not effectively restrict the lift off in the footprint area. The materials contemplated for use in the construction of the ribs **22** having the requisite strength and rigidity to inhibit tread lift during runflat operation of the tire **10** will be, of course, a function of the tire designer's need to meet the runflat structural needs with an acceptable degree of normal-inflated riding comfort and vehicle handling.

The minimum preferred circumferential spacing between each rib **22** (as shown in **FIGURE 1**) is a function of the smooth entry into and out of contact of the tread with the road surface. Larger rib widths will use larger spacing between ribs. Therefore, a wide range of between 15 percent and 200 percent of the width W of the rib(s) on either side of the spacing. Thus several hundred ribs **22** might be used in a given single-tire application. However, the specific number of the ribs **22** placed in a given tire would, of course, be determined according to the dimensions and the tensile and bending strengths of each particular rib of each particular set of ribs in a tire and the load requirement of the particular vehicle and intended use of the tire.

The rib can be straight or have a curvature. The curvature can follow the natural ply line or have a higher radius at either end. Another function of the plurality of ribs **22,24** is to prevent puncture protection against cuts and objects on the road.

### Dynamics of Operation of the Invention

The plurality of tread-reinforcing support members **23,** whether they are monolithic ribs **22** or layered ribs **24** according to the above described three-layered design, have two modes of operation in providing a tread-lift-inhibiting stiffening influence upon the tread **12** of the tire **10.** One mode derives from the inherent stiffness of the proposed composite material of which the ribs **22,24** are made. In other words, the ribs **22,24** are, by their structure alone, inherently semi-rigid. The other mode by which the ribs **22,24** serve to inhibit tread lift involves a combination of high longitudinal tensile-stress-bearing strength of the ribs due to the use of such high-strength and high-modulus filler materials as glass or carbon fibers and to the intended disposition of the ribs in a location that is radially inward of the tread **12** and the belt structure **13.** In that location, radially inward of the belt structure, the ribs will be exposed to tensile stresses that will necessarily arise upon upward deflection of the central portion of the tread during runflat operation. More specifically, the latter mode of stiffening can be described in terms of an analogy involving an I-beam, as discussed below.

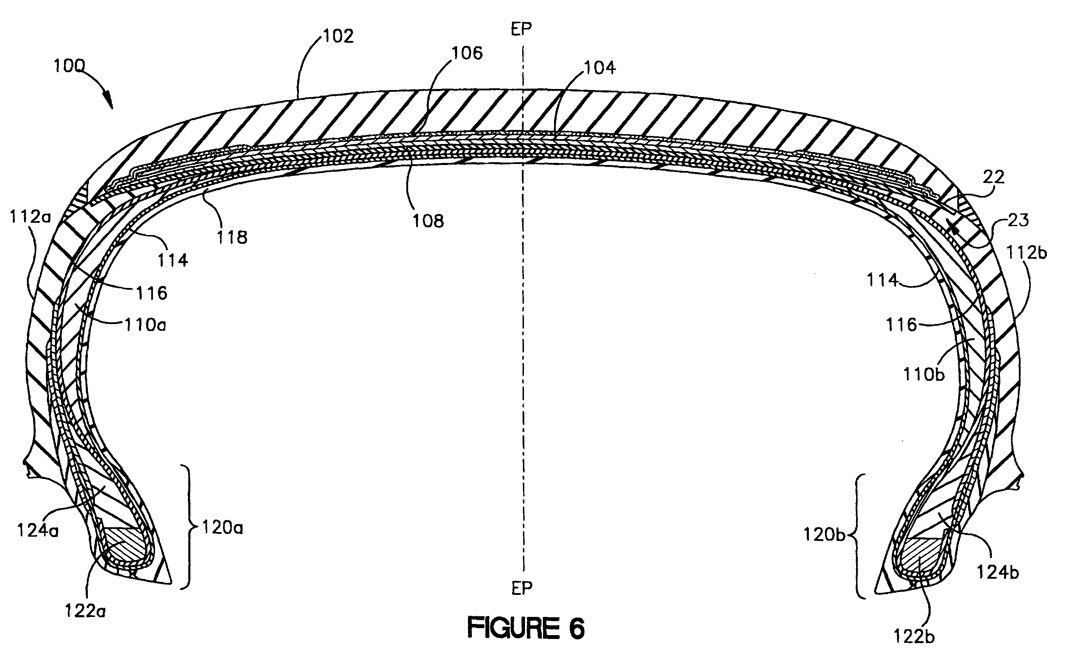

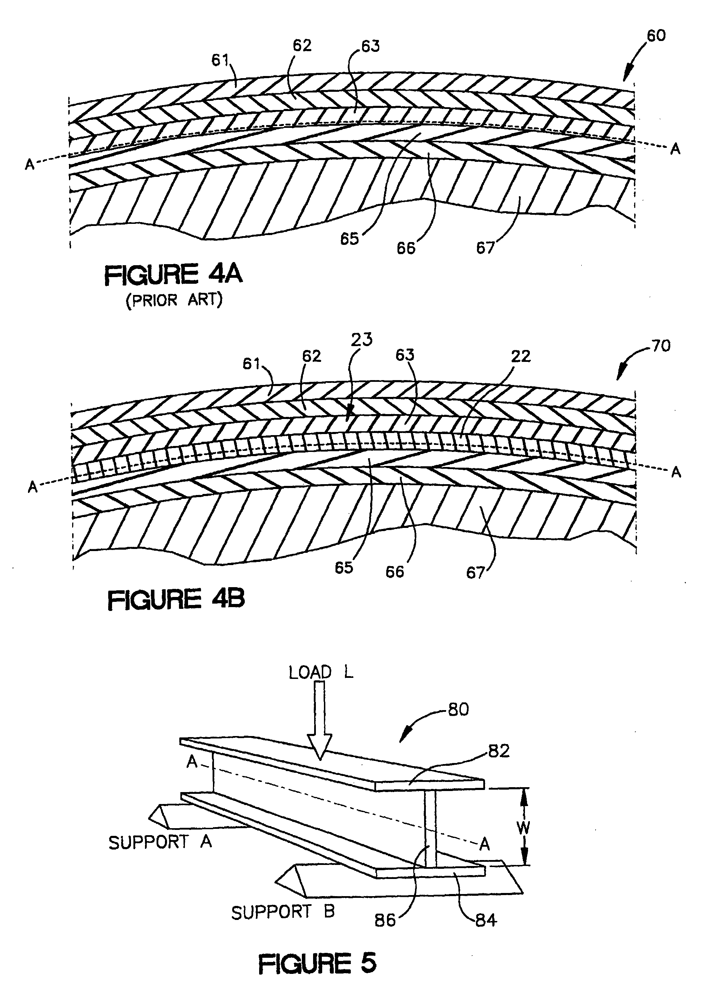

**FIGURE 3** shows a fragmentary cross-sectional view of the ground-contacting portion of a prior art tire tread **50** undergoing lateral tread lift. The central tread portion **52** is shown to be out of contact with the ground **54. FIGURE 4A** is a fragmentary cross-sectional view of the central most portion **60** of the tread section **50** shown in **FIGURE 3.** The tire components shown in **FIGURE 4A** are the inner liner **61,** a first carcass ply **62,** a second carcass ply **63,** a first belt **65,** a second belt **66,** and a portion of the tread **67.** The neutral bending axis **A-A** is shown close to the interface between the second ply **63** and the first belt **65,** which is not necessarily the precise location of the neutral bending axis, though, for the purposes of explaining the tread-stiffening dynamics of the invention, that location of the neutral bending axis will suffice. The structures shown lying above the neutral bending axis **A-A,** such as the carcass plies, are in tension, while those lying below the neutral axis, including the belts **65,66** are in compression.

**FIGURE 4B** includes all of the structure shown in **FIGURE 4A,** with a tread-reinforcing support member **23** (either tread-reinforcing rib **22** or **24**) disposed in the location between the second carcass ply **63** and the first belt **65.** In **FIGURE 4B,** the neutral bending axis **A-A** is shown displaced slightly away from the belts **65,66,** as compared with the prior art construction, due to the presence of the rib **22.** The presence of the rib **22** causes the location of the neutral bending axis **A-A** to move slightly radially inward and away from the radially inwardmost portion of the first belt **65.** Thus each such rib **22** is shown to be located primarily on the tensile-stress side of the neutral bending axis, though in reality, given such other factors as the actual thickness and compression-bearing properties of the belts or the thickness and strength of the ply layers, each rib might lie entirely on the tensile-stress side of the neutral bending axis **A-A.** In that location, the tensile-stress-bearing capacity of the ribs comes in to play in stiffening the tread in ways described more fully below.

As described earlier, the stiffening effect conferred upon the tread by the ribs **22** derives from (1) the inherent stiffness of the fiber-reinforced composite structure of the rib material and (2) the tensile-stress-bearing strength of the rib in its location on the tensile-stress side of the neutral bending axis. In fact, upon contemplation of **FIGURE 4B**, the presence of the rib **22** in the location shown is such as to have an additional mode of action in its tread-stiffening role. The presence of the rib **22** displaces the compression-stress-bearing belt layers **65,66** farther from the tensile-stress-bearing ply layers **62,63,** which confers upon those respective structures a greater moment arm of influence with respect to the neutral bending axis **A-A.** More specifically, the I-beam analogy mentioned earlier comes into play and can be visualized by referring to **FIGURE 5.**

The I-beam **80** shown in **FIGURE 5** spans a region between a support A and a support **B** while bearing a load **L.** The upper flange **82** is thus the primary compression-stress-bearing component of the I-beam **80,** along with those portions of the web **86** lying on the compression side of the neutral bending axis **A-A.** Correspondingly, the flange **84** and the portions of the web **86** lying below the neutral bending axis are in tension. In the analogy to the tread segment **70** shown in **FIGURE 4B,** the compression-bearing flange **82** of the I-beam **80** corresponds to the belts **65,66** in **FIGURE 4B** while the tensile-stress-bearing flange **84** corresponds to the radial plies **62,63.** Given these analogous correspondences, the presence of the rib **22** (**FIGURE 4B**) has the effect of increasing the width **W** of the I-beam's web **86.** In other words, if the fragmentary tire section **70** shown in **FIGURE 4B** were considered as an I-beam, the rib **22,** because of its thickness, has the effect of increasing the web's width **W.** Those skilled in the tire building arts will of course recognize that an increase in the width of the web of an I-beam will correspond to an increase the I-beam's bending moment of inertia because the respective moment arms of the stress-bearing flanges **82,84** will be increased with respect to the neutral bending axis **A-A.** In addition, the tensile-stress-bearing capacity of each rib **22,** as well as its presence primarily on the tensile-stress side of the neutral bending axis **A-A (FIGURE 4B),** has the effect of increasing the total cross-sectional area of the tensile-stress-bearing portions of the analogous I-beam **80** shown in **FIGURE 5**.

### Preferred Embodiment

**FIGURE 6** is a meridional cross-sectional view of a runflat tire **100** incorporating a plurality of support members **23** such as parallel-aligned ribs **22** or **24** beneath a tread **102** in the location that is radially inward of the belt structure **104** (shown with a fabric overlay **106**) and radially outward of the ply structure **108.** (**FIGURE 6** is essentially a meridional cross-sectional view of a specific tire **100** that is equivalent to the more generalized tire **10** of **FIGURE 1**.) The runflat tire **100** has such additional tire components as the one or more wedge inserts **110a,110b** in each sidewall portion **112a,112b,** as well as one or more radial carcass plies **114,116,** inner liner **118,** and bead regions **120a,120b** comprising beads **122a,122b** and bead apexes **124a,124b.**

While the embodiment shown in **FIGURE 6** (and **FIGURE 1**) is intended to represent a more or less typical runflat tire incorporating the ribs **22** of the present invention (which inhibit lateral and circumferential tread lift during runflat operation), the embodiment of the present invention described above and shown in **FIGURE 6** is intended only to indicate a typical rather than specific mode of deployment of the invention which could as well be incorporated within the designs of the many other designs of runflat tires as presently exist or as could plausibly be anticipated within the realm of runflat tire technology.

Furthermore, the design geometry of the ribs **22** and their layout within a given tire is a function of the tire size, aspect ratio and intended use. The inventor anticipates that the ribs **22,24** could be used as a means to provide strength and reduce the mass or number of other tire components in a wide variety of tire designs including those intended not only for passenger cars but also earthmovers, aircraft and both light and heavy trucks. The range of width, thickness, length and spacing in each of the tire designs would vary in accordance with numerous other tire design parameters and intended tire end-use modes.

## Claims

1. A pneumatic radial ply runflat tire (**100**) having a tread (**102**), two inextensible annular beads (**122a,122b**), a carcass ply structure (**108**) comprising one or more radial plies (**114, 116**), a belt structure (**104**) located between the tread and the ply structure, an inner liner (**118**), and two sidewalls (**112a,112b**) each reinforced by at least one wedge insert (**110a,110b**), the tire being **characterized by**:
a plurality of parallel-aligned support members **(23)** lying laterally across and radially inward of the tread (**102**).

2. The tire (**100**) of claim 1 **characterized in that** the plurality of parallel-aligned support members (**23**) are disposed between the tread (**102**) and the belt structure (**104**).

3. The tire (**100**) of claim 1 **characterized in that** the plurality of parallel-aligned support members (**23**) are radially inward of the belt structure (**104**).

4. The tire (**100**) of claim 1 **characterized in that** the support members (**23**) are ribs **(22,24)** having a length equal to between about 50 percent and 110 percent of the width of the belt structure (**104**).

5. The tire (**100**) of claim 4 **characterized in that** each rib (**22**) is a monolithic, fiber-reinforced plastic material.

6. The tire (**100**) of claim 5 **characterized in that** the plastic material has a plastic matrix selected from the group comprising a thermoplastic from the class of materials comprising polyetherimide, polyetheretherketone and polyphenylene sulfide or a thermoset from the class of materials comprising epoxy and polyester.

7. The tire (**100**) of claim 6 **characterized in that** the fiber-reinforcing materials are of the class of materials comprising carbon fiber and fiberglass.

8. The tire (**100**) of claim 7 **characterized in that** the preferred formulation of the fiber-reinforced plastic material is between 30 percent and 70 percent by weight of the fiber reinforcing material and the remainder plastic matrix.

9. The tire (**100**) of claim 4 **characterized in that** each rib (**24**) is layered.

10. The tire (**100**) of claim 9 **characterized in that** each rib comprises three layers (**40,42,44**).

11. The tire (**100**) of claim 10 **characterized in that** the first layer (**40**) and the third layer (**44**) of each rib (**24**) are made of a fiber-reinforced plastic material.

12. The tire (**100**) of claim 11 **characterized in that** the plastic material of the first layer (**40**) and the third layer (**44**) of each rib (**24**) has a plastic matrix of a thermoplastic from the class of materials comprising polyetherimide, polyetheretherketone and polyphenylene sulfide and a thermoset from the class of materials comprising epoxy and polyester.

13. The tire (**100**) of claim 12 **characterized in that** the fiber-reinforcing materials are of the class of materials comprising carbon fiber and fiberglass.

14. The tire (**100**) of claim 11 **characterized in that** the preferred formulation of the fiber-reinforced plastic material is between 30 percent and 70 percent by weight of the fiber reinforcing material and the remainder plastic matrix.

15. The tire (**100**) of claim 10 **characterized in that** the middle layer (**42**) of each layered rib (**24**) is made of an elastomeric material.

16. The tire (**100**) of claim 15 **characterized in that** reinforcing fibers within each monolithic rib (**22**) are preferably unidirectional, being aligned with the axis extending along the length of the rib.

17. The tire (**100**) of claim 11 **characterized in that** reinforcing fibers within the first layer (**40**) and the third layer (**44**) of rib (**24**) are preferably unidirectional, being aligned with the axis along the length of the rib.

18. The tire (**100**) of claim 1 **characterized in that** the thickness **T** of each rib (**22**) of the plurality of ribs is preferably between 10 percent and 45 percent of the width W of the rib.

19. The tire (**100**) of claim 1 **characterized in that** the minimum preferred circumferential spacing between each rib (**22,24**) in the plurality of reinforcing members is between 15 percent and 200 percent of the width of the ribs on either side of the spacing.

20. The tire (**100**) of claim 3 **characterized in that** the plurality of support members (**23**) are disposed within the ply structure (**16**).

## Patentansprüche

1. Radialluftreifen (100) mit Notlaufeigenschaften, der einen Laufstreifen (102), zwei nicht ausdehnbare ringförmige Wülste (122a, 122b), eine Karkassenlagenstruktur (108) mit einer oder mehreren radialen Lagen (114, 116), eine Gürtelstruktur (104), die sich zwischen dem Laufstreifen und der Lagenstruktur befindet, einen Innerliner (118) und zwei Seitenwände (112a, 112b), wovon jede durch wenigstens einen Keileinsatz (110a, 110b) verstärkt ist, umfasst, wobei der Reifen **gekennzeichnet ist durch**:
mehrere parallel ausgerichtete Unterstützungselemente (23), die seitlich über dem Laufstreifen (102) und radial innerhalb des Laufstreifens (102) liegen.

2. Reifen (100) nach Anspruch 1, **dadurch gekennzeichnet, dass** die mehreren parallel ausgerichteten Unterstützungselemente (23) zwischen dem Laufstreifen (102) und der Gürtelstruktur (104) angeordnet sind.

3. Reifen (100) nach Anspruch 1, **dadurch gekennzeichnet, dass** die mehreren parallel ausgerichteten Unterstützungselemente (23) sich radial innerhalb der Gürtelstruktur (104) befinden.

4. Reifen (100) nach Anspruch 1, **dadurch gekennzeichnet, dass** die Unterstützungselemente (23) Rippen (22, 24) sind, deren Länge im Bereich von etwa 50 Prozent bis 110 Prozent der Breite der Gürtelstruktur (104) liegt.

5. Reifen (100) nach Anspruch 4, **dadurch gekennzeichnet, dass** jede Rippe (22) aus einem monolithischen, faserverstärkten Kunststoff besteht.

6. Reifen (100) nach Anspruch 5, **dadurch gekennzeichnet, dass** der Kunststoff eine Kunststoffgrundmasse besitzt, die aus der Gruppe ausgewählt ist, die einen Thermoplast aus der Klasse von Werkstoffen, die Polyetherimid, Polyetheretherketon und Polyphenylen-Sulfid enthält, oder einen wärmehärtenden Kunststoff aus der Klasse der Werkstoffe, die Epoxid und Polyester enthält, umfasst.

7. Reifen (100) nach Anspruch 6, **dadurch gekennzeichnet, dass** die faserverstärkenden Werkstoffe aus der Klasse von Werkstoffen sind, die Kohlenstoffasern und Glasfasern umfasst.

8. Reifen (100) nach Anspruch 7, **dadurch gekennzeichnet, dass** die bevorzugte Formelmischung des faserverstärkten Kunststoffs im Bereich von 30 Gewichtsprozent bis 70 Gewichtsprozent des faserverstärkenden Werkstoffs und der Kunststoffgrundmasse als Rest liegt.

9. Reifen (100) nach Anspruch 4, **dadurch gekennzeichnet, dass** jede Rippe (24) geschichtet ist.

10. Reifen (100) nach Anspruch 9, **dadurch gekennzeichnet, dass** jede Rippe drei Schichten (40, 42, 44) umfasst.

11. Reifen (100) nach Anspruch 10, **dadurch gekennzeichnet, dass** die erste Schicht (40) und die dritte Schicht (44) jeder Rippe (24) aus einem faserverstärkten Kunststoff hergestellt sind.

12. Reifen (100) nach Anspruch 11, **dadurch gekennzeichnet, dass** der Kunststoff der ersten Schicht (40) und der dritten Schicht (44) jeder Rippe (24) eine Kunststoffgrundmasse aus einem Thermoplast aus der Klasse von Werkstoffen, die Polyetherimid, Polyetheretherketon und Polyphenylen-Sulfid enthält, und aus einem wärmehärtenden Kunststoff aus der Klasse von Werkstoffen, die Epoxid und Polyester enthält, umfasst.

13. Reifen (100) nach Anspruch 12, **dadurch gekennzeichnet, dass** die faserverstärkenden Werkstoffe aus der Klasse von Werkstoffen sind, die Kohlenstoffasern und Glasfasern umfasst.

14. Reifen (100) nach Anspruch 11, **dadurch gekennzeichnet, dass** die bevorzugte Formelmischung des faserverstärkten Kunststoffs im Bereich von 30 Gewichtsprozent bis 70 Gewichtsprozent des faserverstärkenden Werkstoffs und der Kunststoffgrundmasse als Rest liegt.

15. Reifen (100) nach Anspruch 10, **dadurch gekennzeichnet, dass** die mittlere Schicht (42) jeder geschichteten Rippe (24) aus einem Elastomerwerkstoff hergestellt ist.

16. Reifen (100) nach Anspruch 15, **dadurch gekennzeichnet, dass** die Verstärkungsfasern in jeder monolithischen Rippe (22) vorzugsweise unidirektional sind und auf die in Längsrichtung der Rippe verlaufende Achse ausgerichtet sind.

17. Reifen (100) nach Anspruch 11, **dadurch gekennzeichnet, dass** Verstärkungsfasern in der ersten Schicht (40) und in der dritten Schicht (44) der Rippe (24) vorzugsweise unidirektional sind und auf die Längsachse der Rippe ausgerichtet sind.

18. Reifen (100) nach Anspruch 1, **dadurch gekennzeichnet, dass** die Dicke T jeder Rippe (22) der mehreren Rippen vorzugsweise im Bereich von 10 Prozent bis 45 Prozent der Breite W der Rippe liegt.

19. Reifen (100) nach Anspruch 1, **dadurch gekennzeichnet, dass** der minimale bevorzugte Zwischenraum in Umfangsrichtung zwischen jeder Rippe (22, 24) in den mehreren Verstärkungselementen im Bereich von 15 Prozent bis 200 Prozent der Breiten der Rippen auf jeder Seite des Zwischenraums liegt.

20. Reifen (100) nach Anspruch 3, **dadurch gekennzeichnet, dass** die mehreren Unterstützungselemente (23) in der Lagenstruktur (16) angeordnet sind.

## Revendications

1. Bandage pneumatique à nappe radiale permettant de rouler à plat (100) possédant une bande de roulement (102), deux talons annulaires inextensibles (122a, 122b), une structure de nappe de carcasse (108) comprenant une ou plusieurs nappes radiales (114, 116), une structure de ceintures (104) disposée entre la bande de roulement et la structure de nappes, un calandrage intérieur (118), et deux flancs (112a, 112b), chacun étant renforcé par au moins une pièce rapportée cunéiforme (110a, 110b), le bandage pneumatique étant **caractérisé par** :
plusieurs éléments de support mis en alignement parallèle (23) disposés latéralement en direction transversale et s'étendant en direction radiale vers l'intérieur de la bande de roulement (102).

2. Bandage pneumatique (100) selon la revendication 1, **caractérisé en ce que** lesdits plusieurs éléments de support mis en alignement parallèle (23) sont disposés entre la bande de roulement (102) et la structure de ceintures (104).

3. Bandage pneumatique (100) selon la revendication 1, **caractérisé en ce que** lesdits plusieurs éléments de support mis en alignement parallèle (23) sont disposés en s'étendant en direction radiale vers l'intérieur de la structure de ceintures (104).

4. Bandage pneumatique (100) selon la revendication 1, **caractérisé en ce que** les éléments de support (23) sont des nervures (22, 24) dont la longueur représente entre environ 50 % et 110 % de la largeur de la structure de ceintures (104).

5. Bandage pneumatique (100) selon la revendication 4, **caractérisé en ce que** chaque nervure (22) représente une matière plastique monolithique renforcée par des fibres.

6. Bandage pneumatique (100) selon la revendication 5, **caractérisé en ce que** la matière plastique possède une matrice en matière plastique choisie parmi le groupe comprenant une matière thermoplastique choisie parmi la classe de matières comprenant du polyétherimide, de la polyétheréthercétone et du polyphénylènesulfure ou encore une matière thermodurcissable choisie parmi la classe de matières comprenant une résine époxy et du polyester.

7. Bandage pneumatique (100) selon la revendication 6, **caractérisé en ce que** les matières fibreuses de renforcement font partie de la classe de matières comprenant des fibres de carbone et des fibres de verre.

8. Bandage pneumatique (100) selon la revendication 7, **caractérisé en ce que** la formulation préférée de la matière plastique renforcée avec des fibres comprend la matière fibreuse de renforcement à concurrence de 30 à 70 % en poids, le reste étant représenté par la matrice en matière plastique.

9. Bandage pneumatique (100) selon la revendication 4, **caractérisé en ce que** chaque nervure (24) est stratifiée.

10. Bandage pneumatique (100) selon la revendication 9, **caractérisé en ce que** chaque nervure comprend trois couches (40, 42, 44).

11. Bandage pneumatique (100) selon la revendication 10, **caractérisé en ce que** la première couche (40) et la troisième couche (44) de chaque nervure (24) est constituée d'une matière plastique renforcée avec des fibres.

12. Bandage pneumatique (100) selon la revendication 11, **caractérisé en ce que** la matière plastique de la première couche (40) et de la troisième couche (44) de chaque nervure (24) possède une matrice en matière plastique constituée d'une matière thermoplastique choisie parmi la classe de matières comprenant du polyétherimide, de la polyétheréthercétone et du polyphénylènesulfure ou encore une matière thermodurcissable choisie parmi la classe de matières comprenant une résine époxy et du polyester.

13. Bandage pneumatique (100) selon la revendication 12, **caractérisé en ce que** les matières fibreuses de renforcement font partie de la classe de matières comprenant des fibres de carbone et des fibres de verre.

14. Bandage pneumatique (100) selon la revendication 11, **caractérisé en ce que** la formulation préférée de la matière plastique renforcée avec des fibres comprend la matière fibreuse de renforcement à concurrence de 30 à 70 % en poids, le reste étant représenté par la matrice en matière plastique.

15. Bandage pneumatique (100) selon la revendication 10, **caractérisé en ce que** la couche médiane (42) de chaque nervure stratifiée (24) est constituée d'une matière élastomère.

16. Bandage pneumatique (100) selon la revendication 15, **caractérisé en ce que** les fibres de renforcement à l'intérieur de chaque nervure monolithique (22) sont de préférence unidirectionnelles, en étant mises en alignement avec l'axe s'étendant sur la longueur de la nervure.

17. Bandage pneumatique (100) selon la revendication 11, **caractérisé en ce que** les fibres de renforcement à l'intérieur de la première couche (40) et de la troisième couche (44) de la nervure (24) sont de préférence unidirectionnelles, en étant mises en alignement avec l'axe s'étendant sur la longueur de la nervure.

18. Bandage pneumatique (100) selon la revendication 1, **caractérisé en ce que** l'épaisseur T de chaque nervure monolithique (22) desdites plusieurs nervures représente de préférence entre 10 % et 45 % de la largeur W de la nervure.

19. Bandage pneumatique (100) selon la revendication 1, **caractérisé en ce que** l'écartement circonférentiel minimal préféré entre chaque nervure (22, 24) dans lesdits plusieurs éléments de renforcement représente entre 15 % et 200 % de la largeur des nervures de part et d'autre de l'écartement.

20. Bandage pneumatique (100) selon la revendication 3, **caractérisé en ce que** lesdits plusieurs éléments de support (23) sont disposés à l'intérieur de la structure de nappes (16).
